# EUROPEAN PATENT SPECIFICATION

(11) **EP 1 693 788 B1**
(45) Date of publication and mention of the grant of the patent: **13.10.2010**
(21) Application number: 06075374.6
(22) Date of filing: 17.02.2006
(51) Int. Cl.: G06K 19/07, G09F 9/35, G09F 3/20

(54) **Information label for intelligent shelf in shops**
Informationslabel für intelligentes Regal in Geschäften
Etiquette informative pour étagères intelligentes dans les magasins

(30) Priority: 18.02.2005 NL 1028331
(43) Date of publication of application: 23.08.2006
(73) Proprietor: N.V. Nederlandsche Apparatenfabriek NEDAP, 7141 DC Groenlo (NL)
(72) Inventor: Hogen Esch, Johannes Harm Lukas, 7122 ZN Aalten (NL)
(74) Representative: Winckels, Johannes Hubertus F.

(56) References cited:
- EP-A- 1 248 229
- WO-A-01/39115
- WO-A-99/38117
- WO-A-02/054365
- US-A- 5 539 393

## Description

The invention relates to an information label for price information and other information intended to cooperate with a so-called "smart shelf' environment according to the features of claim 1. An information label according to the features of the preamble of claim 1 is known from document US 5 539 393.

The invention further relates to an intelligent shelf system in shops, providing at least one shelf and at least one transmitting/receiving system for generating an electromagnetic transmission field for reading out product labels attached to products located in the shelf.

Due to the input of electronic product information to articles, the usual barcode being replaced by an Electronic Product Code (EPC), with the aid of intelligent shelves or "smart shelves", it becomes possible to quickly take stock of which articles are present on the shelves. This is possible because the transmission of information from the electronic labels to the articles takes place in a contactless manner. To this end, in or near the smart shelf, a transmitter/receiver has been provided, which provides the product labels with energy and receives the information back from these labels with the aid of electromagnetic waves.

On the front sides of the shelves, usually an information label is provided on which the prices of the articles present on the shelves are stated.

The invention provides an electronic information label which is, for instance, provided on the front of a shelf via rail system and which contactlessly receives its energy supply and any information from the transmitter/receiver present in or near the respective intelligent shelf. So, the information label according to the present invention is not provided with a battery. For instance from US patent publication 5,853,196 by Wilkus et al., electronic price labels are known which are fed from a battery or from a light track on the front of the shelves, while sometimes contactless communication is also used to provide these price labels with information. The drawback of battery supply is that these labels need to be replaced periodically or need to be provided with a new battery and the drawback of a light track is the unreliability of the large number of electrical contacts necessary for this in a shop environment.

The present invention further provides a system which is **characterized in that** the shelf system is further provided with an information label, the information label being provided with a display and being arranged for contactlessly absorbing energy from the transmission field for displaying information on the display.

The invention will be explained in more detail with reference to the drawing, in which:
Fig. 1 shows a system according to the invention; and
Fig. 2 shows an information label according to the invention.

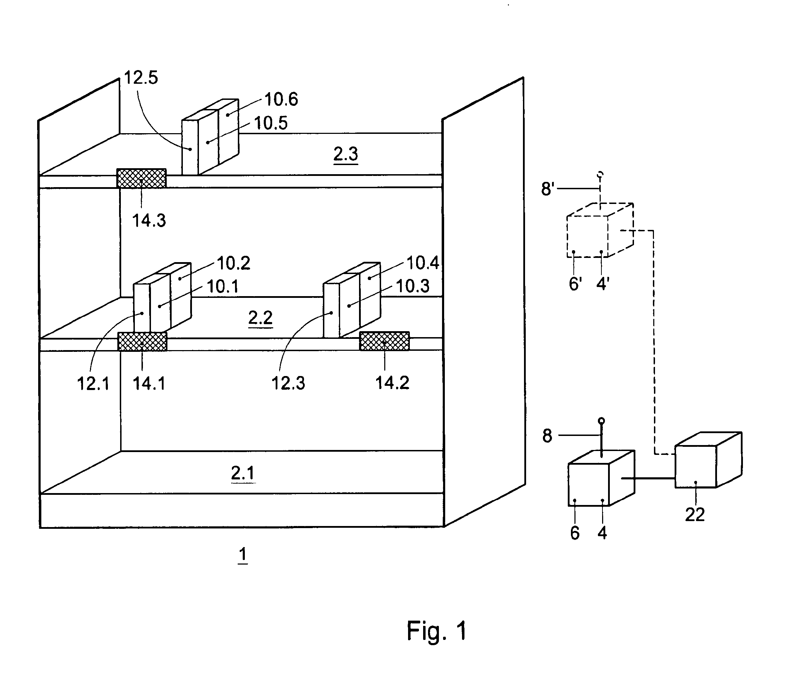

In Fig. 1, reference numeral 1 designates an intelligent shelf system for shops according to the invention. The intelligent shelf system is provided with three shelves 2.1, 2.2 and 2.3 and at least one transmitting/receiving system 4 (transmitter/receiver) for generating an electromagnetic transmission field. In this example, the transmitting/receiving system 4 comprises a single transmitting/receiving device 6 provided with an antenna 8. In this example, the transmitting/receiving device has been placed near the shelves 2.1, 2.3. The transmitting/receiving device could also be connected with one of the shelves.

In this example, a number of products 10.1-10.6 are located on the shelves. The products 10.1 and 10.2 as well as the products 10.3 and 10.4 are located on the shelf 2.2. The products 10.5 and 10.6 are located on the shelf 2.3. The products 10.1-10.6 are each provided with a product label 12.1-12.6 known per se. These are product labels known per se which replace the usual barcode with, for instance, an electronic product code (EPC). The product labels can be read out wirelessly with the aid of the transmitting/receiving device 6 when they are introduced into the transmission field. To this end, the product label may be provided with an antenna known per se comprising a resonant circuit tuned to the frequency of the transmission field and be provided with a microprocessor and a memory in which, for instance, the EPC code has been stored. The resonant circuit and the memory are connected with the microprocessor. The resonant circuit responds when it is introduced into the transmission field. The antenna may, for instance, be designed as a coil. Thus, the energy is withdrawn from the transmission field with which the microprocessor and the memory can be controlled. When the product label is introduced into the transmission field and responds thereto, for instance the IPC code is read from the memory and it will be wirelessly fed to the transmitter/receiver. This is, for instance, the RIFD technology known per se. To this end, the transmitting/receiving system 4 can work according to the absorption principle known per se. It is also possible that the transmitter and receiver on the transmitting/receiving device 6 are separated from each other and that the information is read out via the so-called transmission principle.

The shelf system is further provided with a number of information labels 14.1-14.3. The information labels 14.1 and 14.2 are attached to the shelf 2.2 while the information label 14.3 is attached to the shelf 2.3. Each information label is provided with a display and is arranged for contactlessly absorbing energy from the transmission field for displaying information on the display. In this example, each of the information labels is arranged to be attached to a shelf. In this example, each information label is provided with an antenna which is, for instance, designed as a coil, which antenna is part of a resonant circuit tuned to the frequency of the transmission field as well as a microprocessor and a memory. Thus, the information label can communicate with the transmitter/receiver via a same communication protocol as the product label. However, in addition, the information label is provided with a display which is connected with the microprocessor.

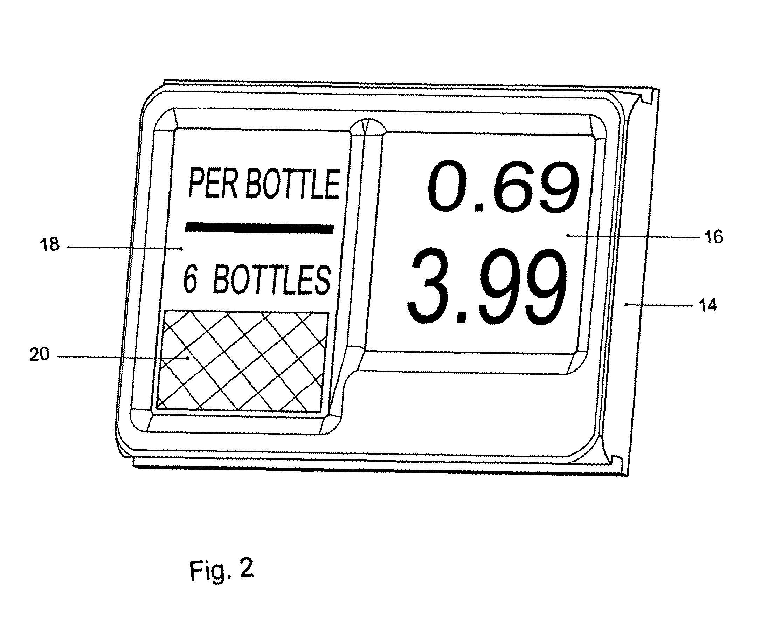

Fig. 2 shows a possible embodiment of such an information label 14.

The information label according to Fig. 2 contains a small display 16, for instance in an LCD (Liquid Crystal Display) technology, which can operate with a small amount of energy. It is possible to use a display in the so-called e-ink technology, where the information remains readable even with loss of energy. In addition to the display with variable information, a window 18 is provided in which fixed information, for instance a brand logo 20 or other article specifications can be provided. Further, the information label is provided with an antenna, for instance in the form of a coil, with which, in a contactless manner, electromagnetic energy can be picked up from a transmission field of the transmitter/receiver 6 near the intelligent shelf. This takes place in a manner similar to the manner with the contactless RFID (Radio Frequent Identification Device) product information labels 12.1-12.6 provided on the articles 10.1-10.6. For the transmission of information from the transmitting/receiving system 4 to the information label 14 and vice versa, use is also made of the same communication protocol which the transmitting/receiving system 4 also uses for the transmission of the electronic EPC product codes.

In accordance with the EPC codes of the articles, each information label 14 is provided with a unique number or a unique code, so that the transmitting/receiving system 4 can distinguish between the different information labels provided on the shelves and can approach them individually to transmit information. If use is made of a transmitting/receiving system with a plurality of transmitting/receiving devices 6 which are each provided with an antenna, it is even possible to globally determine the position of the information labels on the shelves, which of course also holds for the articles present on the shelves because the positions of the product labels can be determined. This can also be carried out when the transmitting/receiving system 4 is provided with one transmitter and a plurality of receivers arranged in different positions. Of course, the antennas then need to be in different locations so that the respective position can be determined on the basis of cross bearing.

In order not to be dependent on the communication with and/or the energy supply by means of the transmitting/receiving system 4 all the time, the information label is provided with a microprocessor and a non-volatile memory, which also retains the stored information during an interruption of the energy supply and in which multiple information file s can be stored, which can then be activated with a simple command from the transmitting/receiving system 4 in order to subsequently be displayed on the display of the information label.

If the information label is provided with a graphic display, in addition to variable price information, product information in a form similar to an illuminated news trailer or an animation can also be displayed. Even customer-specific information is possible if a contactless customer card is recognized by the transmitting/receiving system 4 in or near the intelligent shelf.

It is further possible to display a reference to substitute articles if a particular article is not in stock anymore.

Finally, an escape route indication, for instance in the form of arrows, can be shown on all information labels on the front of the shelves in order to be able to clear a building quickly in case of calamities.

The invention is not limited in any way to the above-described embodiments. In the example, in the memory of the information label, information has been stored of at least a part which can be displayed on the display by means of a command transmitted via the transmission signal. So, by means of this command, a part of the stored information can be selected for display on the display. This command may, for instance, relate to the price of a product and the like. However, it is also conceivable that the information which is displayed on the display is included in the transmission signal, for instance in that the information is encrypted in the command itself. It is further possible for the system to be arranged for recognizing a customer card which can be detected contactlessly by the transmitting/receiving system 4 when the customer card is located in the transmission field. The customer card then responds to the transmission field in the same manner in which the product label responds in the transmission field. The customer card may then, for instance, make the identity of the client knowable. The transmitting/receiving system 4 receives this identity and can pass it on to, for instance, a computer 22. In computer 22, the data of clients have been stored. Then, depending on the identity of the respective user, the system can decide to display particular information on one of the information labels. Here, an information label can be identifiable within the system because an identification code stored in the information label can be read out so that a predetermined information label can be controlled as desired by means of the transmitting/receiving system 4 for displaying particular information intended for the respective client. The content of this information may, again, be selected from information stored in the respective memory of the information label or be, again, included in the above-mentioned command signal. It is also conceivable that the system is arranged for displaying information on a display of one of the information labels depending on a detected presence or absence of the product label on the shelf. Thus, the product labels can be detected with the aid of the transmitting/receiving system 4 and be fed to the computer 22. The computer 22 then knows which products are on the shelf and which products are not on the shelf and are, for instance, sold out. Depending thereon, the computer can display information selected via the transmitting/receiving system 4 on a selected number of information labels, for instance that the product is sold out or, also, that, for instance, another product is referred to. In particular, it holds that the transmitting/receiving system 4 is arranged for determining a position of the information label on the basis of a response of the information label in the transmission field. As said, this can be carried out when the system is provided with more than one receiver which are each provided with an antenna, the antennas being located in mutually different positions. Each receiver may then be connected with the computer 22 which calculates where an information label is located on the basis of, for instance, a method according to cross bearing. Completely analogously, it may, for instance, be determined by the computer with the aid of a plurality of the receivers as discussed hereinabove where product labels are located. Thus, information on an information label can then be displayed which relates to products located in the proximity of the information label. In this example, the transmitting/receiving device 6r is located just outside the shelves. It is also possible that they are located at a somewhat larger distance from the shelves or that they are located in the shelves or are attached to the shelves. Thus, the system may be arranged to determine positions of customer cards, information labels or product labels. Such variants are each understood to be within the framework of the invention.

In this example, it holds that transmission of information can take place from the transmitting/receiving system 4 to an information label. Also, information can be transmitted from an information label to the transmitting/receiving system 4, for instance an identification code of an information label. In this example, it holds that information such as the identity of a product can be transmitted from a product label to the transmitting/receiving system. Here, it also holds that a flow of information in an opposite direction is also possible, for instance when a product label is to be provided with an extra coding such as a best-before date or an indication of origin. Such variants are also within the framework of the invention. It preferably holds that the transmission of information between the transmitting/receiving system 4 and the information label takes place according to a same communication protocol as used with transmission of information between the transmitting/receiving system 4 and a product label. The communication protocol may be a protocol for transmitting EPC codes.

## Claims

1. An information label (14) provided with at least one display (16), the information label for displaying information on the display being arranged to contactlessly absorb energy, **characterized in that** the information label absorbs energy from the transmission field of a transmitting/receiving system (4) for reading out product labels (12) which are attached to products (10), and that the information label is further arranged to communicate with the transmitting/receiving system via a same communication protocol as the product label.

2. An information label (14) according to claim 1, **characterized in that** the information label is arranged for being attached to the at least one shelf (2) for shops.

3. An information label (14) according to claim 1 or 2, **characterized in that** the display (16) comprises an LCD.

4. An information label (14) according to any one of claims 1-3, **characterized in that** the display comprises a display (16) based on e-ink technology.

5. An information label (14) according to any one of the preceding claims, **characterized in that** the information label is attached to the shelf (2) for shops.

6. An information label (14) according to any one of the preceding claims, **characterized in that** the information label is provided with a fixed indication such as a logo.

7. An information label (14) according to any one of the preceding claims, **characterized in that** the information label is provided with an antenna and a microprocessor coupled therewith.

8. An information label (14) according to claim 7, **characterized in that** the information label is provided with a resonant circuit comprising the antenna with at least one resonance frequency tuned to a frequency of the transmission field.

9. An information label (14) according to claim 7 or 8, **characterized in that** the information label operates according to the RFID technology.

10. An information label (14) according to any one of claims 7-9, **characterized in that** the information label is further provided with a non-volatile memory which is connected with the microprocessor.

11. An information label (14) according to claim 10, **characterized in that**, in the memory, information has been stored of which at least a part can be displayed on the display by means of a command transmitted via the transmission field.

12. An information label (14) according to claim 11, **characterized in that**, by means of the command, a part of the stored information can be selected for display on the display.

13. An information label (14) according to any one of the preceding claims, **characterized in that** the display is arranged for displaying graphic information.

14. An information label (14) according to any one of the preceding claims, **characterized in that** the information label is arranged for displaying an escape route on the display.

15. An information label (14) according to any one of the preceding claims, **characterized in that** the communication protocol is a protocol for transmitting EPC codes.

16. An information label (14) according to any one of the preceding claims, **characterized in that** the information label is without a battery.

17. An information label (14) according to any one of the preceding claims, **characterized in that** the information label is provided with an identification code which can be read out with the aid of the transmitting/receiving system (4).

18. An information label (14) according to any one of the preceding claims, **characterized in that** the information label is provided with a graphic display on which the information can be represented in a form similar to an illuminated news trailer.

19. An information label (14) according to any one of the preceding claims, **characterized in that** the information label is provided with a graphic display (16) on which the information can be represented in the form of an animation.

20. An intelligent shelf system (1) for shops, provided with at least one shelf (2) for shops and at least one transmitting/receiving system (4) for generating an electromagnetic transmission field for reading out product labels (12) which are attached to products (10) located in the shelf, **characterized in that** the shelf system for shops is further provided with an information label (14) according to any one of claims 1-18.

21. A system (1) according to any claim 20, **characterized in that** the system is further arranged for recognizing a customer card which can contactlessly be detected by the transmitting/receiving system when it is located in the transmission field in a same manner as the manner in which a product label is recognized by the transmitting/receiving system when the product label is located in the transmission field.

22. A system (1) according to claim 21, **characterized in that** the system is arranged for displaying information on the display (16) depending on a customer card detected by the system.

23. A system (1) according to any one of claims 20-22, **characterized in that** the system is arranged for displaying information on the display depending on a detected presence or absence of a product label (12) on the shelf for shops.

24. A system (1) according to any one of claims 20-23, **characterized in that** the transmitting/receiving system (4) is arranged for determining a position of the information label (14) and/or product label (12) on the basis of a response of the information label and/or product label in the transmission field.

25. A system (1) according to any one of claims 19-24, **characterized in that** the system is further provided with at least one product label (12).

26. A system (1) according to claim 25, **characterized in that** the product label is attached to a product located on the at least one shelf for shops.

27. A system (1) according to any one of claims 20-26, **characterized in that** the system is arranged for displaying information transmitted via the transmission signal on the display.

28. A system (1) according to any one of the preceding claims 20-27, **characterized in that**, on the information label (14), a reference to a substitute article is represented if a particular article is not in stock anymore.

29. A subsystem provided with a transmitting/receiving system (4) and at least one information label (14) of the system (1) according to any one of claims 20-28.

## Patentansprüche

1. Informationsetikett (14), welches mindestens ein Display (16) aufweist, wobei das Informationsetikett zur Anzeige von Informationen auf dem Display derart angeordnet ist, dass es Energie kontaktlos aufnimmt, **dadurch gekennzeichnet, dass** das Informationsetikett Energie von dem Übertragungsgebiet eines Sende-/Empfangssystems (4) zum Ablesen von Produktetiketten (12), welche an den Produkten (10) angebracht sind, aufnimmt, und dass das Informationsetikett des Weiteren zur Kommunikation mit dem Sende-/Empfangssystem über dasselbe Kommunikationsprotokoll wie das Produktetikett angeordnet bzw. ausgelegt ist.

2. Informationsetikett (14) nach Anspruch 1, **dadurch gekennzeichnet, dass** das Informationsetikett zur Anbringung an dem mindestens einen Regal (2) für Geschäfte ausgelegt ist.

3. Informationsetikett (14) nach Anspruch 1 oder 2, **dadurch gekennzeichnet, dass** das Display (16) ein LCD aufweist.

4. Informationsetikett (14) nach einem der Ansprüche 1 bis 3, **dadurch gekennzeichnet, dass** das Display ein Display (16) basierend auf E-Ink-Technologie aufweist.

5. Informationsetikett (14) nach einem der vorhergehenden Ansprüche, **dadurch gekennzeichnet, dass** das Informationsetikett an dem Regal (2) für Geschäfte angebracht ist.

6. Informationsetikett (14) nach einem der vorhergehenden Ansprüche, **dadurch gekennzeichnet, dass** das Informationsetikett eine fest angebrachte Bezeichnung wie beispielsweise einen Aufdruck bzw. ein Logo aufweist.

7. Informationsetikett (14) nach einem der vorhergehenden Ansprüche, **dadurch gekennzeichnet, dass** das Informationsetikett eine Antenne und einen mit dieser gekoppelten Mikroprozessor aufweist.

8. Informationsetikett (14) nach Anspruch 7, **dadurch gekennzeichnet, dass** das Informationsetikett einen die Antenne aufweisenden Resonanzkreis mit zumindest einer Resonanzfrequenz aufweist, welche auf eine Frequenz des Übertragungsgebiets abgestimmt ist.

9. Informationsetikett (14) nach Anspruch 7 oder 8, **dadurch gekennzeichnet, dass** das Informationsetikett gemäß der RFID-Technologie arbeitet.

10. Informationsetikett (14) nach einem der Ansprüche 7 bis 9, **dadurch gekennzeichnet, dass** das Informationsetikett des Weiteren einen nichtflüchtigen Speicher aufweist, welcher mit dem Mikroprozessor gekoppelt ist.

11. lnformationsetikett (14) nach Anspruch 10, **dadurch gekennzeichnet, dass** in dem Speicher Informationen gespeichert worden sind, von denen zumindest ein Teil auf dem Display mit Hilfe eines über das Überteragungsgebiet gesendeten Befehls angezeigt werden kann.

12. Informationsetikett (14) nach Anspruch 11, **dadurch gekennzeichnet, dass** mit Hilfe des Befehls ein Teil der gespeicherten Informationen zur Anzeige auf dem Display ausgewählt werden kann.

13. Informationsetikett (14) nach einem der vorhergehenden Ansprüche, **dadurch gekennzeichnet, dass** das Display zur Anzeige von Graphikinformationen ausgelegt ist.

14. Informationsetikett (14) nach einem der vorhergehenden Ansprüche, **dadurch gekennzeichnet, dass** das Informationsetikett zur Anzeige eines Fluchtwegs bzw. Notausgangs auf dem Display ausgelegt ist.

15. Informationsetikett (14) nach einem der vorhergehenden Ansprüche, **dadurch gekennzeichnet, dass** das Kommunikationsprotokoll ein Protokoll für die Übertragung von elektronischen Produktcodes bzw. EPC-Codes ist.

16. Informationsetikett (14) nach einem der vorhergehenden Ansprüche, **dadurch gekennzeichnet, dass** das Informationsetikett ohne Batterie arbeitet.

17. Informationsetikett (14) nach einem der vorhergehenden Ansprüche, **dadurch gekennzeichnet, dass** das Informationsetikett mit einem Kennzeichnungscode versehen ist, welcher mit Hilfe des Sende-/Empfangssystems (4) abgelesen werden kann.

18. Informationsetikett (14) nach einem der vorhergehenden Ansprüche, **dadurch gekennzeichnet, dass** das Informationsetikett ein Graphik-Display aufweist, auf welchem die Informationen in einer Form ähnlich wie bei einem beleuchteten Nachrichten-Trailer dargestellt werden können.

19. Informationsetikett (14) nach einem der vorhergehenden Ansprüche, **dadurch gekennzeichnet, dass** das Informationsetikett ein Graphik-Display (16) aufweist, auf welchem Informationen in Form einer Animation dargestellt werden können.

20. Intelligentes Regalsystem (1) für Geschäfte, welches mindestens ein Regal (2) für Geschäfte und mindestens ein Sende-/Empfangssystem (4) zur Erzeugung eines elektromagnetischen Übertragungsgebiets zum Ablesen von Produktetiketten (12) aufweist, welche an in dem Regal angeordneten Produkten (10) angebracht sind, **dadurch gekennzeichnet, dass** das Regalsystem für Geschäfte des Weiteren ein Informationsetikett (14) gemäß einem der Ansprüche 1 bis 18 aufweist.

21. System (1) nach Anspruch 20, **dadurch gekennzeichnet, dass** das System des Weiteren zur Erkennung einer Kundenkarte ausgelegt ist, welche durch das Sende-/Empfangssystem kontaktlos auf die gleiche Art und Weise erfasst werden kann, wenn sie sich im Übertragungsgebiet befindet, wie bei dem Fall, dass ein Produktetikett von dem Sende-/Empfangssystem erkannt wird, wenn sich das Produktetikett in dem Übertragungsgebiet befindet.

22. System (1) nach Anspruch 21, **dadurch gekennzeichnet, dass** das System zur Anzeige von Informationen auf dem Display (16) abhängig von einer von dem System erfassten Kundenkarte ausgelegt ist.

23. System (1) nach einem der Ansprüche 20 bis 22, **dadurch gekennzeichnet, dass** das System zur Anzeige von Informationen auf dem Display abhängig von einem erfassten Vorhandensein oder Nichtvorhandensein eines Produktetiketts (12) auf dem Ladenregal ausgelegt ist.

24. System (1) nach einem der Ansprüche 20 bis 23, **dadurch gekennzeichnet, dass** das Empfangs-/Sendesystem (4) zur Bestimmung einer Position des Informationsetiketts (14) und/oder des Produktetiketts (12) basierend auf einer Antwort des Informationsetiketts und/oder Produktetiketts in dem Übertragungsgebiet ausgelegt ist.

25. System (1) nach einem der Ansprüche 19 bis 24, **dadurch gekennzeichnet, dass** das System des Weiteren mindestens ein Produktetikett (12) aufweist.

26. System (1) nach Anspruch 25, **dadurch gekennzeichnet, dass** das Produktetikett an einem Produkt angebracht ist, welches sich auf dem mindestenen einen Ladenregal befindet.

27. System (1) nach einem der Ansprüche 20 bis 26, **dadurch gekennzeichnet, dass** das System zur Anzeige von Informationen ausgelegt ist, welche über das Sendesignal auf dem Display übertragen werden.

28. System (1) nach einem der Ansprüche 20 bis 27, **dadurch gekennzeichnet, dass** auf dem Informationsetikett (14) ein Hinweis auf einen Ersatzartikel dargestellt wird, falls ein bestimmter Artikel nicht mehr vorrätig ist.

29. Untersystem, welches ein Sende-/Empfangssystem (4) und mindestens ein Informationsetikett (14) des Systems (1) nach einem der Ansprüche 20 bis 28 aufweist.

## Revendications

1. Etiquette informative (14) pourvue d'au moins un affichage (16), l'étiquette informative pour afficher l'information sur l'affichage étant agencée pour absorber sans contact de l'énergie, **caractérisée en ce que** l'étiquette informative absorbe de l'énergie depuis le champ d'émission d'un système d'émission/réception (4) pour lire les étiquettes de produit (12) qui sont fixées sur des produits (10), et **en ce que** l'étiquette informative est en outre agencée pour communiquer avec le système d'émission/réception via un même protocole de communication que l'étiquette de produit.

2. Etiquette informative (14) selon la revendication 1, **caractérisée en ce que** l'étiquette informative est agencée pour être fixée sur l'au moins une étagère (2) pour magasins.

3. Etiquette informative (14) selon la revendication 1 ou 2, **caractérisée en ce que** l'affichage (16) comprend un affichage à cristaux liquides.

4. Etiquette informative (14) selon l'une quelconque des revendications 1-3, **caractérisée en ce que** l'affichage comprend un affichage (16) basé sur une technologie d'encre électronique.

5. Etiquette informative (14) selon l'une quelconque des revendications précédentes, **caractérisée en ce que** l'étiquette informative est fixée sur l'étagère (2) pour magasins.

6. Etiquette informative (14) selon l'une quelconque des revendications précédentes, **caractérisée en ce que** l'étiquette informative est pourvue d'une indication fixe comme un logo.

7. Etiquette informative (14) selon l'une quelconque des revendications précédentes, **caractérisée en ce que** l'étiquette informative est pourvue d'une antenne et d'un microprocesseur couplé à celle-ci.

8. Etiquette informative (14) selon la revendication 7, **caractérisée en ce que** l'étiquette informative est pourvue d'un circuit résonnant comprenant l'antenne avec au moins une fréquence de résonance accordée à une fréquence du champ d'émission.

9. Etiquette informative (14) selon la revendication 7 ou 8, **caractérisée en ce que** l'étiquette informative fonctionne selon une technologie RFID.

10. Etiquette informative (14) selon l'une quelconque des revendications 7-9, **caractérisée en ce que** l'étiquette informative est en outre pourvue d'une mémoire non-volatile qui est connectée au microprocesseur.

11. Etiquette informative (14) selon la revendication 10, **caractérisée en ce que**, dans la mémoire, de l'information a été stockée dont au moins une partie peut être affichée sur l'affichage au moyen d'une commande émise via le champ d'émission.

12. Etiquette informative (14) selon la revendication 11, **caractérisée en ce que**, au moyen de la commande, une partie de l'information stockée peut être sélectionnée pour affichage sur l'affichage.

13. Etiquette informative (14) selon l'une quelconque des revendications précédentes, **caractérisée en ce que** l'affichage est agencé pour afficher une information graphique.

14. Etiquette informative (14) selon l'une quelconque des revendications précédentes, **caractérisée en ce que** l'étiquette informative est agencée pour afficher un chemin d'évacuation sur l'affichage.

15. Etiquette informative (14) selon l'une quelconque des revendications précédentes, **caractérisée en ce que** le protocole de communication est un protocole pour transmettre des codes électroniques de produits.

16. Etiquette informative (14) selon l'une quelconque des revendications précédentes, **caractérisée en ce que** l'étiquette informative est sans piles.

17. Etiquette informative (14) selon l'une quelconque des revendications précédentes, **caractérisée en ce que** l'étiquette informative est pourvue d'un code d'identification qui peut être lu avec l'aide du système d'émïssion/réception (4).

18. Etiquette informative (14) selon l'une quelconque des revendications précédentes, **caractérisée en ce que** l'étiquette informative est pourvue d'un affichage graphique sur lequel l'information peut être représentée sous une forme similaire à un affichage défilant lumineux.

19. Etiquette informative (14) selon l'une quelconque des revendications précédentes, **caractérisée en ce que** l'étiquette informative est pourvue d'un affichage graphique (16) sur lequel l'information peut être représentée sous la forme d'une animation.

20. Système d'étagère intelligente (1) pour magasins, pourvu d'au moins une étagère (2) pour magasins et d'au moins un système d'émission/réception (4) pour générer un champ d'émission électromagnétique pour lire des étiquettes de produit (12) qui sont fixées sur des produits (10) situés sur l'étagère, **caractérisé en ce que** le système d'étagère pour magasins est en outre pourvu d'une étiquette informative (14) selon l'une quelconque des revendications 1-18.

21. Système (1) selon la revendication 20, **caractérisé en ce que** le système est en outre agencé pour reconnaitre une carte de client qui peut sans contact être détectée par le système d'émission/réception quand elle est située dans le champ d'émission de la même manière qu'une étiquette de produit est reconnue par le système d'émission/réception quand l'étiquette de produit est située dans le champ d'émission.

22. Système (1) selon la revendication 21, **caractérisé en ce que** le système est agencé pour afficher l'information sur l'affichage (16) en fonction d'une carte de consommateur détectée par le système.

23. Système (1) selon l'une quelconque des revendications 20-22, **caractérisé en ce que** le système est agencé pour afficher une information sur l'affichage selon une présence ou une absence détectée d'une étiquette de produit (12) sur l'étagère pour magasins.

24. Système (1) selon l'une quelconque des revendications 20-23, **caractérisé en ce que** le système d'émission/réception (4) est agencé pour déterminer une position de l'étiquette informative (14) et/ou de l'étiquette de produit (12) en fonction d'une réponse de l'étiquette informative et/ou de l'étiquette de produit dans le champ d'émission.

25. Système (1) selon l'une quelconque des revendications 19-24, **caractérisé en ce que** le système est en outre pourvu d'au moins une étiquette de produit (12).

26. Système (1) selon la revendication 25, **caractérisé en ce que** l'étiquette de produit est fixée sur un produit situé sur l'au moins une étagère pour magasins.

27. Système (1) selon l'une quelconque des revendications 20-26, **caractérisé en ce que** le système est agencé pour afficher une information émise via le signal d'émission sur l'affichage.

28. Système (1) selon l'une quelconque des revendications 20-27, **caractérisé en ce que**, sur l'étiquette informative (14), une référence à un article de substitution est représentée si un article particulier n'est plus en stock.

29. Sous-système pourvu d'un système d'émission/réception (4) et d'au moins une étiquette informative (14) du système (1) selon l'une quelconque des revendications 20-28.
